# EUROPÄISCHE PATENTSCHRIFT

(11) **EP 1 453 657 B1**
(45) Veröffentlichungstag und Bekanntmachung des Hinweises auf die Patenterteilung: **30.03.2005**
(21) Anmeldenummer: 02792997.5
(22) Anmeldetag: 13.12.2002
(51) Int. Cl.: B29C 65/74, B29C 65/08, B26D 1/14, B26D 7/08

(54) **SONOTRODE ZUM SCHNEIDENDEN UND SCHWEISSENDEN BEARBEITEN VON WERKSTÜCKEN**
SONOTRODE FOR CARRYING OUT CUTTING AND WELDING OPERATIONS ON WORKPIECES
SONOTRODE POUR EFFECTUER DES OPERATIONS DE COUPE ET DE SOUDAGE SUR DES PIECES

(30) Priorität: 15.12.2001 DE 10161723
(43) Veröffentlichungstag der Anmeldung: 08.09.2004
(73) Patentinhaber: Rinco Ultrasonics AG, 8590 Romanshorn (CH)
(72) Erfinder: SZUCHER, Attila, CH-9213 Hauptwil (CH)
(74) Vertreter: Riebling, Peter, Dr.-Ing.
(86) Internationale Anmeldenummer: PCT/EP2002/014195
(87) Internationale Veröffentlichungsnummer: WO 2003/051612

(56) Entgegenhaltungen:
- EP-A- 0 800 900
- DE-U- 29 813 964
- US-A- 3 681 176
- US-B1- 6 325 127

## Beschreibung

Gegenstand der Erfindung ist eine Sonotrode zum Bearbeiten von Werkstücken nach dem Oberbegriff des Patentanspruchs 1.

Bisher war es nach dem Stand der Technik nicht möglich, eine Sonotrode gleichzeitig für 2 Operationen, nämlich Schweißen und Schneiden, zu verwenden, sondern lediglich für einen Arbeitsvorgang.

Eine derartige Sonotrode ist beispielsweise mit dem Gegenstand der EP 567 426 A2 bekannt geworden. Bei der genannten EP 567 426 A2 handelt es sich um ein sogenanntes Hubschneiden. Dies bedeutet, dass die Sonotrode in axialer Richtung Hubbewegungen ausführt und die stumpfe Vorderseite des Sonotrodenhoms ausstanzungsähnliche Schneidvorgänge an einem Werkstück vornehmen soll. Ein Längsschneiden entlang der Kante eines Werkstückes ist mit dieser Anordnung nicht möglich. Ein gleichzeitiger Betrieb der Sonotrode als Schweißwerkzeug und als Schneidewerkzeug ist jedoch bei dieser Anordnung nicht vorgesehen. Damit besteht der Nachteil, dass wenn ein Schneiden und Schweißen verlangt wird, dass dann die genannten beiden Operationen hintereinander folgend ausgeführt werden müssen. Hier besteht die Gefahr einer verminderten Qualität, weil wegen der unterschiedlichen Führung eines Schneid- und eines Schweißwerkzeuges die Parallelität der Schweißnaht zur Schnittkante nicht gewährleistet ist. Bei entsprechend schwierig gestalteten Konturen von entsprechenden Werkstücken war es sogar unmöglich, diese Operationen hintereinander folgend auszuführen.

DE-U-29813962 U zeigt eine Sonotrode nach dem Oberbegriff des Anspruchs 1.

Der Erfindung liegt deshalb die Aufgabe zugrunde, eine Sonotrode der eingangs genannten Art so weiterzubilden, dass das Schneiden und Schweißen mit wesentlich besserer Genauigkeit und höherer Qualität erfolgen kann, sowie ein Verfahren zum Betrieb dieser zu beschreiben.

Zur Lösung der gestellten Aufgabe ist die Sonotrode nach der technischen Lehre des Anspruchs 1 gekennzeichnet.

Wesentliches Merkmal der Erfindung ist, dass in axialer Richtung der Sonotrode gesehen ein zirkulares Schneidmesser im wesentlichen schwingungsfrei an dem Sonotrodenkörper befestigt ist und dass im übrigen im axialen Abstand von dem Schneidmesser an dem Sonotrodenkörper eine Sonotrodenscheibe angeordnet ist, welches als Schwingungsübertrager mit seinem Aussenumfang den Schweißvorgang ausführt.

Mit der gegebenen technischen Lehre ergibt sich der wesentliche Vorteil, dass nun an ein und dem gleichen Werkzeug sowohl ein Schweißwerkzeug in Form einer Sonotrodenscheibe als auch zusätzlich ein Schneidwerkzeug in Form eines Schneidmessers angeordnet ist.

Selbstverständlich ist es im Rahmen der vorliegenden Erfindung beliebig, wie das Schneidmesser ausgebildet ist. Das Schneidmesser wird bevorzugt als Schneidscheibe ausgebildet, die also ringsum laufende Schneidkanten aufweist. Hierauf ist die Erfindung jedoch nicht beschränkt. Das Schneidmesser kann zahnförmig, oval oder in anderer beliebiger Weise am Aussenumfang gestaltet sein. Auch müssen die Schneidkanten nicht umlaufend ausgebildet sein, sondern sie können entsprechend unterbrochen sein. Bei entsprechendem Betrieb eines derartigen Werkzeugs würden dann beispielsweise perforierte Schnittkanten erzielt werden, je nach Wunsch des Schneidergebnisses.

Ebenso ist die Erfindung nicht darauf angewiesen, dass die die Ultraschallschweißung ausführende Sonotrodenscheibe ringsum laufend am Umfang gleichmässig ausgebildet ist. Auch diese Sonotrodenscheibe kann mit am Umfang zurückspringenden Flächen ausgebildet werden, so dass nur einige Flächen hintereinander folgend schweißen und die dahinter zurückspringenden Flächen den Schweißvorgang nicht ausführen. Es wird damit eine Art von einer Steppnaht erzielt.

Wichtig ist, dass das erfindungsgemässe Doppelwerkzeug nun in Art einer Abwälzbewegung sich auf dem Werkstück bewegt und ein Schneiden und Schweißen gleichzeitig stattfindet. Dies ist ein wesentlicher Unterschied und Vorteil gegenüber dem Stand der Technik, denn bei der eingangs genannten Druckschrift erfolgte lediglich ein Hubschneiden, wobei jedoch ein gleichzeitiges Schweißen nicht möglich war.

Mit der technischen Lehre nach der Erfindung besteht nun der Vorteil, beispielsweise ein Gewebe kontinuierlich gegeneinander oder auf ein Kunststoffteil geschweißt werden kann und gleichzeitig während des Schweißens geschnitten werden kann.

Wichtig hierbei ist, dass die Schneidklinge so auf der Sonotrode angebracht ist, dass sie akustisch neutral, d.h. im Wesentlichen schwingungsfrei gelagert ist.

Der Begriff "im Wesentlichen schwingungsfrei" heisst, dass geringfügige Schwingungen auf das Schneidmesser in axialer Richtung zugelassen sind. Diese Schwingungen müssen jedoch begrenzt werden, um einen Bruch des Schneidmessers während des Schneidvorganges zu vermeiden. Der Schneidvorgang erfolgt also nicht unter Einwirkung von UltraschallSchwingungen, sondern es handelt sich um ein rein mechanisches Schneiden. Aus diesem Grund wird erfindungsgemäss die schwingungstechnische Entkopplung zwischen dem Schneidmesser und der Schweiß-Sonotrode vorgeschlagen.

Es ist jedoch im Rahmen der vorliegenden Erfindung nicht ausgeschlossen, dass auch auf das Schneidmesser noch entsprechende radiale Schwingungen ausgeübt werden, so dass die Schneidklinge auch unter Wirkung von Ultraschallschwingungen verbessert in das zu schneidende Werkstück eintritt.

Ein Verfahren zum Betrieb des neuartigen Schweiß- und Schneidwerkzeuges ist dadurch gekennzeichnet, dass das Schweißen und Schneiden in ein und demselben Arbeitsgang stattfindet.

Ein derartiges Verfahren hat den Vorteil, dass es zu einer überlegenen Qualität der Schweiß- und Schneidnaht kommt, denn die beiden Nähte sind unbedingt parallel zueinander, weil ja die beiden Werkzeuge in strenger Parallelität am Sonotrodenkörper angeordnet sind. Damit ist es auch erstmals möglich, auch kompliziert geformte Werkstücke entsprechend zu schneiden oder zu schweißen. In einem - nicht den Erfindungsgedanken der Erfindung beschränkenden - Ausführungsbeispiel wird später beschrieben, dass bei einem etwa schalenförmigen Werkstück eine umgebüggte Kante von einem Gewebe vorhanden ist und diese umgebüggte Kante wird auf dem Rand des schalenförmigen Werkzeugs aufgelegt, festgeschweißt und der überstehende Rand abgeschnitten.

Die sich ergebende Schweißnaht zwischen dem Gewebe und dem KunststoffTeil des Werkstücks ist dann absolut parallel zu der entfernter angeordneten Schneidkante des Gewebes.

Wichtig bei der Erfindung ist, dass der gesamte Sonotrodenkörper rotationssymmetrisch ist, denn das Schweißen und Schneiden erfolgt in Form einer Abwälzbewegung über das Werkstück hinweg.

Es zeigen:
- Figur 1:: Halbschnitt durch eine Sonotrode nach der Erfindung,
- Figur 2:: den Schwingungsverlauf über die Länge der Sonotrode nach Figur 1,
- Figur 3:: eine Schneid- und Schweiß-Station unter Verwendung der erfindungsgemässen Sonotrode,
- Figur 4:: perspektivisch ein Kunststoffteil zur Verarbeitung in der Schneidund Schweiß-Station nach Figur 3,
- Figur 5:: perspektivisch das Kunststoffteil nach Figur 4 mit einem Gewebeüberzug,
- Figur 6:: Stirnansicht der Sonotrode in der Schneid- und Schweiß-Station nach Figur 3,
- Figur 7:: perspektivisch die erfindungsgemässe Sonotrode,
- Figur 8:: die Stirnansicht auf die Sonotrode nach Figur 7.

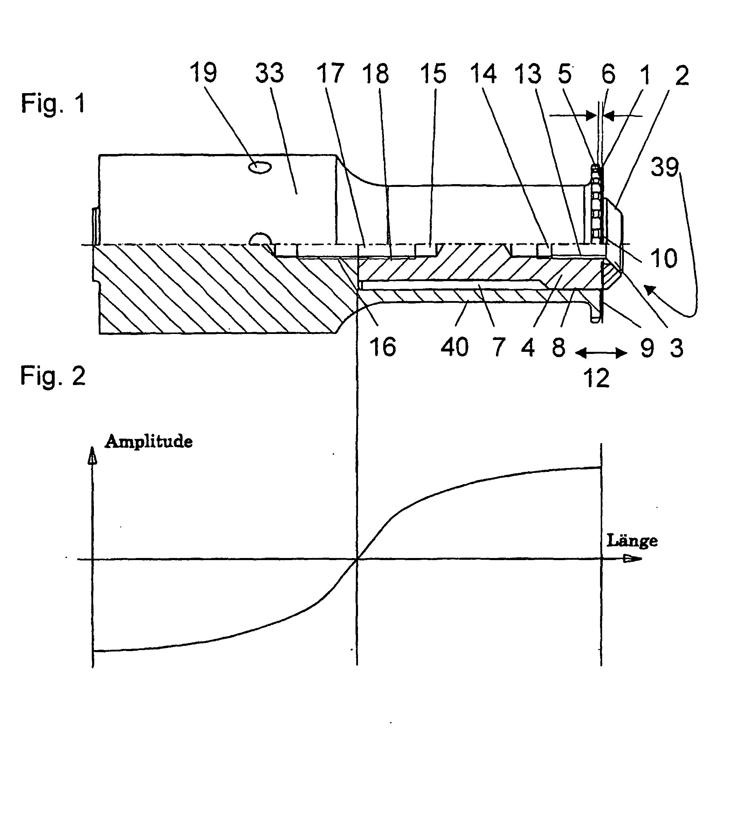

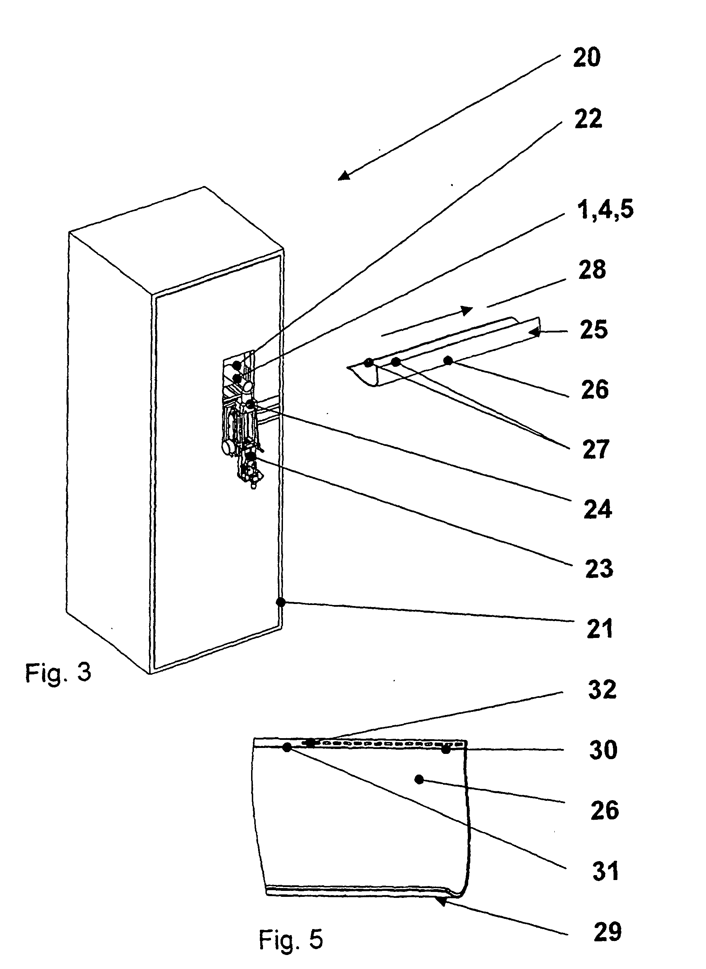

In Figur 1 ist ein Sonotrodenkörper 33 gezeigt, der an seinem hinteren, verdickten Schaft radial einwärts gerichtete Befestigungsbohrungen 19 aufweist, mit denen er auf einem Schwingungserzeuger befestigt wird. Es ist nicht dargestellt, dass dem Sonotrodenkörper 33 ein Drehantrieb zugeordnet ist, wie er beispielsweise in Pfeilrichtung 39 dreht. Dieser Drehantrieb 22 ist in Verbindung mit Figur 3 an der Schneid- und Schweiß-Station 20 angeordnet.

Der Schaft des Sonotrodenkörpers 33 geht in ein Vorderteil verringerten Durchmessers über. Im Mittenbereich bildet der Schaft eine Sackbohrung 15, die ein Innengewinde 18 aufweist. In dieses Gewinde 18 ist eine Gewindehülse 17 eingeschraubt, die ihrerseits radial einwärts mit dem Sonotrodenkörper 33 verklebt ist.

Die Gewindehülse 17 bildet ein vorderes, freies Aussengewinde 16 aus, auf welches ein entsprechender Messerhalter 4 aufgeschraubt ist.

Der Messerhalter ist also in den stirnseitig nach vorne offenen grossen Ringraum 7 des Sonotrodenkörpers 33 eingeschraubt.

Der Schaft verringerten Durchmessers bildet einen axial nach vorne verlängerten Schaft 40, der werkstoffeinstückig mit einer Sonotrodenscheibe 5 verbunden ist.

Der Aussenumfang der Sonotrodenscheibe 5 bildet die Schweißnaht auf einem entsprechenden Kunststoffteil 28 (siehe Figur 5 mit der Steppnaht 32).

Die Erfindung ist nicht darauf beschränkt, den Sonotordenkörpers 33 aus dem Schaft vergrösserten Durchmessers und dem Schaft 40 verkleinerten Durchmessers sowie der daran angeformten Sonotrodenscheibe 5 aus einem Werkstoff auszubilden. Es kann auch vorgesehen sein, dass die Sonotrodenscheibe 5 als getrenntes Teil auf dem Schaft 40 des Sonotrodenkörpers 33 befestigt ist.

In den stirnseitig nach vorne offenen Ringraum 7 wird nun in der vorher beschriebenen Weise der Messerhalter 4 eingeschraubt. Der Messerhalter hat eine vordere Stirnfläche 10, auf der das scheibenförmige Schneidmesser 1 anliegt.

Wichtig ist nun, dass zwischen dieser Stirnfläche 10 und der Stirnfläche 11 der Sonotrodenscheibe 5 eine Distanz 6 ausgebildet ist, die dafür sorgt, dass das Schneidmesser 1 akustisch von der Sonotrodenscheibe 5 entkoppelt ist.

Dies wird dadurch erreicht, dass die Stirnfläche 10 über die Stirnfläche 12 in axialer Richtung hinaus ragt, um so die Distanz 6 zu bilden.

In einem bevorzugtem Ausführungsbeispiel kann die Distanz beispielsweise 0,45 mm betragen. Hierauf ist die Erfindung jedoch nicht beschränkt. Es können beliebige Abstände bezüglich der Distanz 6 gewählt werden; beispielsweise kann das Schneidmesser 1 auch um 10 oder 20 mm von der Sonotrodenscheibe 5 entfernt befestigt werden.

Die weitere Befestigung des Schneidmessers 1 erfolgt mittels einer Haltescheibe 2, deren konische Mittenbohrung von einer Befestigungsschraube 3 durchsetzt ist. Diese Befestigungsschraube 3 wird mit ihrem bolzenseitigen Ende in ein zugeordnetes Gewinde 13 am Innenumfang des Messerhalters 4 eingeschraubt. Das Gewinde 13 ist hierbei im Bereich einer Sackbohrung 14 angeordnet.

Neben der in axialer Richtung wirkenden Entkopplung durch die Distanz 6 zwischen Schneidmesser und Sonotrodenscheibe 5 gibt es auch eine in radialer Richtung wirkende akustische Entkopplung. Hierzu ist der Ringraum 8 vorgesehen, der sich am Aussenumfang des Messerhalters 4 radial auswärts in Richtung zum Innenumfang des Schaftes 40 bildet.

Dieser Ringraum 8 hat beispielsweise eine Dimension von einigen Zehntel mm.

Dieser Ringraum 8 ist also stirnseitig nach vorne offen und bildet dort einen Ringraum 9, der von dem Schneidmesser 1 abgedeckt ist.

Wichtig hierbei ist, dass das Schneidmesser 1 lediglich auf dem Messerhalter 4 befestigt ist und dass akustisch sowohl in axialer als auch in radialer Richtung von dem Sonotrodenkörper 33 entfernt befestigt wird.

Im Wesentlichen schwingt hierbei die Sonotrodenscheibe 5 in den Pfeilrichtungen 12.

Die Figur 2 zeigt eine Schwingungsamplitude über die Länge des Sonotrodenkörpers 33 gezeichnet.

Hierbei ist erkennbar, dass etwa im Mittenbereich des Sonotrodenkörpers (etwa am Fusspunkt des Ringraums 7) das Schwingungs-Null ist und dass der Schaft vergrösserten Durchmessers mit einer Amplitude schwingt, während die Sonotrodenscheibe 5 in der entgegengesetzten Richtung mit einer etwa gleich grossen Amplitude schwingt.

Eine Vorrichtung, in der die Sonotrode 41 eingebaut ist, ist in Figur 3 dargestellt. Die Schneid- und Schweiß-Station 20 besteht im Wesentlichen aus einem Rahmen 21, in dem über entsprechende Aufhängungen die Sonotrodenelemente 1, 4, 5 befestigt ist. Dieser Sonotrode 41 ist ein Drehantrieb 22 zugeordnet.

Im Abstand davon ist ein Gegenwerkzeug 23 vorgesehen, welches in Richtung zur Sonotrode 41 eine Werkstückaufnahme 24 für das Einschieben oder Halten eines zu verarbeitenden Werkstückes 25 bildet. Als Beispiel ist in Figur 4 ein derartiges Werkstück 25 gezeigt, welches im Wesentlichen aus Kunststoff besteht, welcher eine Halbschale 26 bildet, die zueinander symmetrische Ränder 27 ausbildet.

Gemäss Figur 5 soll nun diese Halbschale 26 von der einen Seite her mit einem gewebeartigen Überzeug 29 überzogen werden und die entsprechenden Kanten des Überzuges sollen als Überstände 30 über die Ränder 27 gezogen und dort verschweißt und abgeschnitten werden.

Mit dem erfindungsgemässen Werkzeug und dem erfindungsgemässen Verfahren gelingt es nun, während der Abwälzbewegung des Schneid- und Schneidwerkzeuges beispielsweise in Pfeilrichtung 28 nun gleichzeitig eine Schnittkante 31 zum Abschneiden des Überstandes 29 und zusätzlich eine Steppnaht 32 anzubringen. Mit dieser Steppnaht 32 wird der umgeschlagene Überzug 29 auf die Innenseite der Halbschale 26 verschweißt.

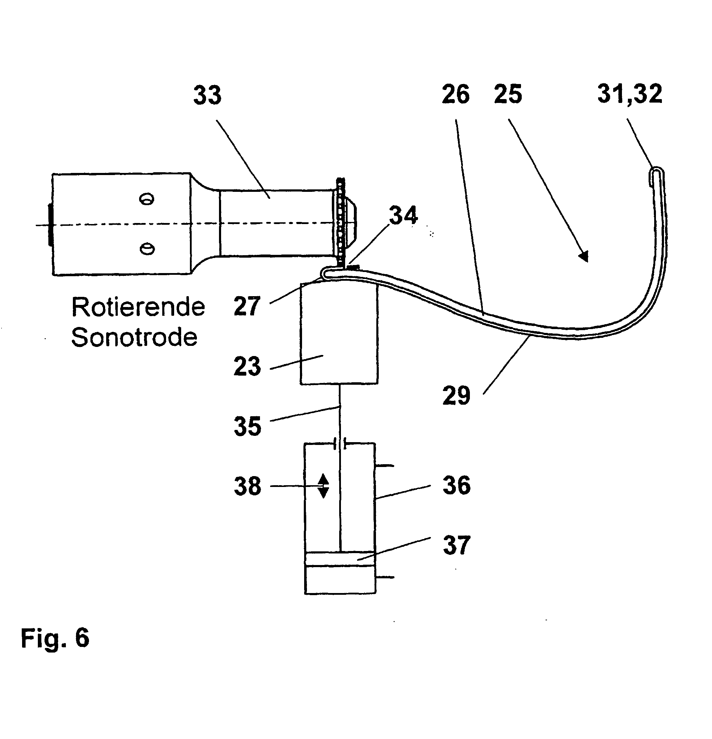

Figur 6 zeigt ein derartiges Werkzeug in vergrösserter und schematisierter Darstellung. Es ist erkennbar, dass durch das Schneidmesser 1 der jenseits der Schnittkante 31 sich bildende Reststück 34 des Überzugs 29 abgeschnitten wird. Gleichzeitig wird mit Hilfe der Sonotrodenscheibe 5 die vorher erwähnte Steppnaht 32 als unterbrochene Schweißnaht angebracht.

Die Figur 6 zeigt ferner, dass das Gegenwerkzeug 23 in den Pfeilrichtungen 38 zu dem Schneid- und Schweißwerkzeug zustellbar ist. Hierzu wird ein Zylinder 36 verwendet, in dessen Innenraum eine Kolbenstange 37 in den beiden Pfeilrichtungen 38 angetrieben ist. Die Kolbenstange 35 wirkt auf das Gegenwerkzeug, welches damit mit veränderbarem Druck das Werkstück 25 gegen das Schneid- und Schweißwerkzeug anpresst.

Wichtig ist also, dass in ein und dem gleichen Arbeitsgang sowohl ein Verschweißen als auch ein Schneiden stattfindet.

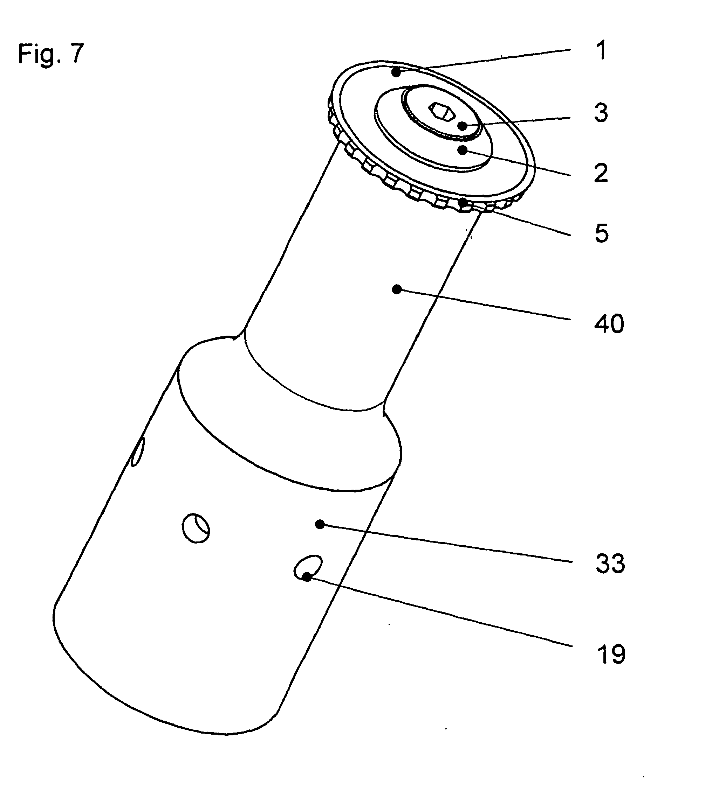

Die Figuren 7 und 8 zeigen die Sonotrode 41 in perspektivischer sowie in Stirnansicht. Es ist erkennbar, dass die Schneidkante des Schneidmessers 1 den Aussenumfang der Sonotrodenscheibe 5 in radialer Richtung überragt. Während also die Schneidkante des Schneidmessers 1 in das zu schneidende Gewebe eindringt und den Schnittvorgang ausführt, wälzt sich gleichzeitig der Aussenumfang der Sonotrodenscheibe 5 auf dem zu verschweißenden Gewebe ab und bildet die vorher erwähnte Steppnaht 32. Selbstverständlich ist es mit der Erfindung möglich, ausser unterbrochenen Steppnähten durchgehende Schweißnähte auszubilden.

### Zeichnungs-Legende

- 1: Schneidmesser
- 2: Haltescheibe
- 3: Befestigungsschraube
- 4: Messerhalter
- 5: Sonotrodenscheibe
- 6: Distanz
- 7: Ringraum (gross)
- 8: Ringraum (klein)
- 9: Ringspalt
- 10: Stirnfläche (Messerhalter)
- 11: Stirnfläche (Sonotrode 5)
- . 12: Pfeilrichtung
- 13: Gewinde
- 14: Sackbohrung
- 15: Sackbohrung
- 16: Gewinde
- 17: Gewindehülse
- 18: Gewinde
- 19: Befestigungsbohrung
- 20: Schneid- und Schweiß- Station
- 21: Rahmen
- 22: Drehantrieb
- 23: Gegenwerkzeug
- 24: Werkstückaufnahme
- 25: Werkstück
- 26: Halbschale
- 27: Rand
- 28: Pfeilrichtung
- 29: Überzug
- 30: Überstand
- 31: Schnittkante
- 32: Steppnaht
- 33: Sonotrodenkörper
- 34: Reststück
- 35: Kolbenstange
- 36: Zylinder
- 37: Kolben
- 38: Pfeilrichtung
- 39: Pfeilrichtung
- 40: Schaft
- 41: Sonotrode

## Patentansprüche

1. Sonotrode (41) zum schneidenden und schweißenden Bearbeiten von Werkstücken (25) in einem Arbeitsgang, wobei der Sonotrode (41) ein Drehantrieb (22) zugeordnet ist, durch den die Sonotrode (41) drehend antreibbar ist und somit die die Sonotrode (41) beim gleichzeitigen Schneiden und Schweißen des Werkstückes (25) eine Abwälzbewegung durchführt und wobei die Sonotrode (41) einen Sonotrodenkörper (33) beinhaltet, an dem ein zirkulares Schneidmesser (1) befestigt ist, welches den Schneidvorgang ausführt und in axialem Abstand von dem Schneidmesser (1) an dem Sonotrodenkörper (33) eine Sonotrodenscheibe (5) angeordnet ist, welche als Schwingungsübertrager mit seinem Aussenumfang den Schweißvorgang ausführt, **dadurch gekennzeichnet, dass** das Schneidmesser (1) auf einem Messerhalter (4) im Wesentlichen schwingungsfrei an dem Sonotrodenkörper (33) befestigt ist und die schwingungstechnische Entkopplung zwischen dem Schneidmesser (1 ) und der Sonotrodenscheibe (5) durch deren axiale Distanz (6) gegeben ist und dass ein Ringraum (8) zwischen Messerhalter (4) und Sonotrodenkörper (33) für die in radialer Richtung wirkende akustische Entkopplung vorgesehen ist.

2. Sonotrode nach Anspruch 1, **dadurch gekennzeichnet, dass** die Schneidkante des Schneidmessers (1) den Aussenumfang der Sonotrodenscheibe (5) in radialer Richtung überragt.

3. Sonotrode nach einem der vorangehenden Ansprüche, **dadurch gekennzeichnet, dass** die Befestigung des Schneidmessers (1) am Messerhalter (4) mittels einer Haltescheibe (2) erfolgt, deren konische Mittenbohrung von einer Befestigungsschraube (3) durchsetzt ist.

4. Sonotrode nach einem der vorangehenden Ansprüche, **dadurch gekennzeichnet, dass** der Messerhalter (4) in einen stimseitig nach vorne offenen Ringraum (7) des Sonotrodenkörpers (33) eingeschraubt ist.

5. Sonotrode nach einem der vorangehenden Ansprüche, **dadurch gekennzeichnet, dass** zwischen der Stirnfläche (10) des Messerhalters (4) und der Stirnfläche (11) der Sonotrode (5) die axiale Distanz (6) ausgebildet ist, die dafür sorgt, dass das Schneidmesser (1) akustisch von der Sonotrodenscheibe (5) entkoppelt ist.

6. Sonotrode nach einem der vorangehenden Ansprüche, **dadurch gekennzeichnet, dass** der Ringraum (8) für eine in radialer Richtung wirkende akustische Entkopplung sich am Aussenumfang des . Messerhalters (4) radial auswärts in Richtung zum Innenumfang des Schaftes (40) ausbildet.

7. Sonotrode nach einem der vorangehenden Ansprüche, **dadurch gekennzeichnet, dass** die Stirnfläche (10) des Messerhalters (4) über die Stirnfläche (11) der Sonotrode (5) in axialer Richtung hinaus ragt, um so die axiale Distanz (6) zu bilden.

8. Sonotrode nach einem der vorangehenden Ansprüche, **dadurch gekennzeichnet, dass** der gesamte Sonotrodenkörper (33) rotationssymmetrisch ist

9. Sonotrode nach einem der vorangehenden Ansprüche, **dadurch gekennzeichnet, dass** im Abstand zur Sonotrode (41) ein Gegenwerkzeug (23) vorgesehen ist, welches in Richtung zur Sonotrode (41) eine Werkstückaufnahme (24) für das Einschieben oder Halten eines zu verarbeitenden Werkstückes (25) bildet.

10. Sonotrode nach einem der vorangehenden Ansprüche, **dadurch gekennzeichnet, dass** das Gegenwerkzeug (23) zu dem Schneid- und Schweißwerkzeug (1, 5) der Sonotrode (41) zustellbar ist.

11. Sonotrode nach einem der vorangehenden Ansprüche, **dadurch gekennzeichnet, dass** das Werkstück (25) mit veränderbarem Druck gegen das Schneid- und Schweißwerkzeug (1, 5) der Sonotrode (41) anpresst wird.

## Claims

1. Sonotrode (41) for machining workpieces (25) by cutting and welding in a single pass, the sonotrode (41) being acted on by a rotary drive (22) by means of which the sonotrode (41) is drivable in rotation so that the the sonotrode (41) executes a relative rolling motion as it simultaneously cuts and welds the workpiece (25), and the sonotrode (41) comprising a sonotrode body (33) on which a circular cutting knife (1) is mounted which performs the cutting operation and a sonotrode disc (5) which is arranged on the sonotrode body (33) with axial clearance from the cutting knife (1) and which performs the welding operation by its outer rim by acting as a vibration transmitter, **characterized in that** the cutting knife (1) is mounted on a knife-holder (4) on the sonotrode body (33) in a substantially vibration-free manner and vibrational decoupling between the cutting knife (1) and the sonotrode disc (5) is realized by their axial clearance (6) and **in that** an annular cavity (8) is provided between knife-holder (4) and sonotrode body (33) for acoustic decoupling in the radial direction.

2. Sonotrode according to Claim 1, **characterized in that** the cutting edge of the cutting knife (1) projects beyond the outer rim of the sonotrode disc (5) in the radial direction.

3. Sonotrode according to any one of the preceding claims, **characterized in that** the cutting knife (1) is attached to the knife-holder (4) by means of a retaining disc (2) whose tapered central bore is transfixed by a fixing screw (3).

4. Sonotrode according to any one of the preceding claims, **characterized in that** the knife-holder (4) is screwed into an endwise forwards-opening annular cavity (7) of the sonotrode body (33).

5. Sonotrode according to any one of the preceding claims, **characterized in that** the axial clearance (6) ensuring that the cutting knife (1) is acoustically decoupled from the sonotrode disc (5) is formed between the end face (10) of the knife-holder (4) and the end face (11) of the sonotrode (5).

6. Sonotrode according to any one of the preceding claims, **characterized in that** the annular cavity (8) for acoustic decoupling in the radial direction is formed on the outer circumference of the knife-holder (4), radially outwards towards the inner circumference of the shank (40).

7. Sonotrode according to any one of the preceding claims, **characterized in that** the end face (10) of the knife-holder (4) juts out beyond the end face (11) of the sonotrode (5) in the axial direction to form the axial clearance (6).

8. Sonotrode according to any one of the preceding claims, **characterized in that** the entire sonotrode body (33) is rotationally symmetrical.

9. Sonotrode according to any one of the preceding claims, **characterized in that** a backing tool (23), which in a direction towards the sonotrode forms a workpiece holder (24) for inserting or holding a workpiece (25) to be machined, is provided, with clearance from the sonotrode (41).

10. Sonotrode according to any one of the preceding claims, **characterized in that** the backing tool (23) can be infed towards the cutting and welding tool (1, 5) of the sonotrode (41).

11. Sonotrode according to any one of the preceding claims, **characterized in that** the workpiece (25) is pressed against the cutting and welding tool (1, 5) of the sonotrode (41) with variable pressure.

## Revendications

1. Sonotrode (41) pour l'usinage par découpage et soudage de pièces (25) en une seule opération, étant précisé qu'on associe à la sonotrode (41) un entraînement rotatif (22) grâce auquel la sonotrode (41) est apte à être entraînée en rotation et décrit ainsi, lors du découpage et du soudage simultanés de la pièce (25), un mouvement de roulement, que la sonotrode (41) contient un corps de sonotrode (33) auquel est fixée une lame circulaire (1) qui effectue le découpage, et qu'il est prévu sur le corps de sonotrode (33), à une distance axiale de la lame (1), une plaque de sonotrode (5) qui effectue le soudage avec sa circonférence extérieure, comme transmetteur de vibrations, **caractérisée en ce que** la lame (1) est fixée sensiblement sans vibrations au corps de sonotrode (33), sur un porte-lame (4), et le découplage en termes de technique de vibrations entre la lame (1) et la plaque de sonotrode (5) est défini par la distance axiale (6) entre celles-ci, et **en ce qu'**il est prévu un espace annulaire (8) entre le porte-lame (4) et le corps de sonotrode (33) pour le découplage acoustique agissant dans le sens radial.

2. Sonotrode selon la revendication 1, **caractérisée en ce que** le tranchant de la lame (1) dépasse dans le sens radial de la circonférence extérieure de la plaque de sonotrode (5).

3. Sonotrode selon l'une des revendications précédentes, **caractérisée en ce que** la fixation de la lame (1) au porte-lame (4) se fait à l'aide d'une plaque de fixation (2) dont le perçage central conique est traversé par une vis de fixation (3).

4. Sonotrode selon l'une des revendications précédentes, **caractérisée en ce que** le porte-lame (4) est vissé dans un espace annulaire (7) du corps de sonotrode (33) qui est ouvert vers l'avant, côté frontal.

5. Sonotrode selon l'une des revendications précédentes, caractérisée ce qu'il est prévu entre la surface frontale (10) du porte-lame (4) et la surface frontale (11) de la sonotrode (5) la distance axiale (6) qui garantit le découplage acoustique entre la lame (1) et la plaque de sonotrode (5).

6. Sonotrode selon l'une des revendications précédentes, **caractérisée en ce que** l'espace annulaire (8) pour un découplage acoustique agissant dans le sens radial s'étend sur la circonférence extérieure du porte-lame (4) radialement vers l'extérieur, en direction de la circonférence intérieure de la tige (40).

7. Sonotrode selon l'une des revendications précédentes, **caractérisée en ce que** la surface frontale (10) du porte-lame (4) dépasse de la surface frontale (11) de la sonotrode (5), dans le sens axial, pour former ainsi la distance axiale (6).

8. Sonotrode selon l'une des revendications précédentes, **caractérisée en ce que** tout le corps de sonotrode (33) présente une symétrie de révolution.

9. Sonotrode selon l'une des revendications précédentes, **caractérisée en ce qu'**il est prévu à une certaine distance de la sonotrode (41) un outil opposé (23) qui forme en direction de la sonotrode (41) un logement de pièce (24) pour l'insertion ou la fixation d'une pièce à traiter (25).

10. Sonotrode selon l'une des revendications précédentes, **caractérisée en ce que** l'outil opposé (23) est apte à être approché de l'outil de coupe et de soudage (1, 5) de la sonotrode (41).

11. Sonotrode selon l'une des revendications précédentes, **caractérisée en ce que** la pièce (25) est pressée contre l'outil de coupe et de soudage (1, 5) de la sonotrode (41) avec une pression variable.
